**Europäisches Patentamt**

**European Patent Office**

**Office européen des brevets**

(19)

(11) **EP 1 483 151 B1**

(12) **EUROPÄISCHE PATENTSCHRIFT**

(45) Veröffentlichungstag und Bekanntmachung des Hinweises auf die Patenterteilung:
**07.09.2005 Patentblatt 2005/36**

(51) Int Cl.7: **B64D 10/00**, A62B 17/00

(21) Anmeldenummer: 02742632.9

(86) Internationale Anmeldenummer:
**PCT/CH2002/000386**

(22) Anmeldetag: **15.07.2002**

(87) Internationale Veröffentlichungsnummer:
**WO 2003/020586 (13.03.2003 Gazette 2003/11)**

(54) **HÖHENSCHUTZ-VORRICHTUNG**

ALTITUDE PROTECTION DEVICE

DISPOSITIF DE PROTECTION D'ALTITUDE

(84) Benannte Vertragsstaaten:
**AT BE BG CH CY CZ DE DK EE ES FI FR GB GR IE IT LI LU MC NL PT SE SK TR**

(30) Priorität: **14.03.2002 CH 439022002**

(43) Veröffentlichungstag der Anmeldung:
**08.12.2004 Patentblatt 2004/50**

(73) Patentinhaber: **LSS Life Support Systems AG 8152 Glattbrugg (CH)**

(72) Erfinder:
• **REINHARD, Andreas
CH-8001 Zürich (CH)**

• **EGLI, Wendelin
CH-8472 Seuzach (CH)**

(74) Vertreter: **Salgo, Reinhold Caspar
Rütistrasse 103
8636 Wald (CH)**

(56) Entgegenhaltungen:
| | |
|---|---|
| EP-A- 0 376 027 | WO-A-99/54200 |
| DE-B- 1 181 553 | US-A- 3 392 405 |
| US-A- 5 007 893 | US-A- 5 127 896 |
| US-A- 5 477 850 | |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft eine Vorrichtung zum Höhenschutz von Piloten und weiteren Besatzungsmitgliedern von Hochleistungsflugzeugen, nach dem Oberbegriff des Patentanspruches 1. Insbesondere betrifft diese Vorrichtung zum Höhenschutz Träger von Beschleunigungsschutzanzügen nach dem hydrostatischen Prinzip.

Eine Höhenschutzvorrichtung ist dann notwendig, wenn der Pilot - und die allfälligen Besatzungsmitglieder - einem plötzlichen Druckverlust im Cockpit des Flugzeuges ausgesetzt sind, sei es, dass ein technischer Defekt die Ursache ist, oder dass die Cockpitabdeckung zerstört oder verlorengegangen ist, oder dass ein Notausstieg notwendig wird. Bei allen diesen Situationen bricht die Druckstabilisierung im Cockpit, die üblicherweise einem Luftdruck auf etwa 2000 m.ü.M. entspricht, zusammen. Je grösser die Flughöhe bei einem solchen genannte Ereignis ist, desto näher kommt der druckabhängige Siedepunkt von wässrigen Lösungen an die tatsächliche Körpertemperatur von etwa 37°C des Piloten.

Bekannte Höhenschutzvorrichtungen, wie die aus US 5,477,850 bekannt, integrieren daher die Funktionen eines Druckanzuges, wie sie aus der Raumfahrt bekannt und erprobt sind. Die Implementierung solcher Funktionen ist jedoch immer mit einer Gewichts- bzw. Massenzunahme eines Beschleunigungsschutzanzuges verbunden.

Die Aufgabe der vorliegenden Erfindung ist die Schaffung einer ergänzenden Einrichtung zu einem Beschleunigungsschutzanzug (fortan G-Anzug), welche die Verbindung mit diesem G-Anzug einen für die genannten Fälle wirksamen Höhenschutz zu leisten vermag in Verbindung mit einer unwesentlichen Massenzunahme des G-Anzuges. Ferner soll der technische und wirtschaftliche Aufwand dafür klein sein.

Die Lösung der gestellten Aufgabe ist wiedergegeben im kennzeichnenden Teil des Patentanspruches 1 hinsichtlich ihrer wesentlichen Merkmale, in den weiteren Patentansprüchen hinsichtlich weiter vorteilhafter Ausbildungen.

Anhand der beigefügten Zeichnungen wird der Erfindungsgegenstand näher erläutert.

Es zeigen

Fig. 1   eine Draufsicht auf die Rückenpartie eines ersten Ausführungsbeispiels,

Fig. 2a   Einen Längsschnitt durch das Ausführungsbeispiel von Fig. 1 im inoperativen Zustande,

Fig. 2b   einen Längsschnitt durch das Ausführungsbeispiel von Fig. 1 im operativen Zustande,

Fig. 3   eine Draufsicht auf die Rückenpartie eines zweiten Ausführungsbeispiels,

Fig. 4   eine Draufsicht auf die Vorderseite eines dritten Ausführungsbeispiels,

Fig. 5   eine Ergänzung zum Ausführungsbeispiel von Fig. 4.

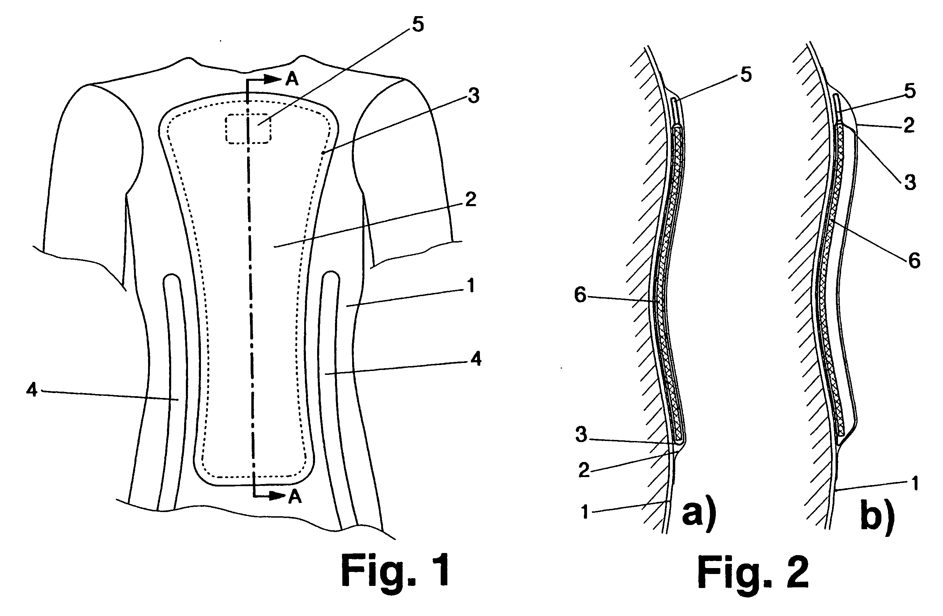

Ein erstes Ausführungsbeispiel des Erfindungsgedankens ist in Fig. 1 dargestellt. Sie zeigt eine Draufsicht auf die Rückenpartie eines G-Anzuges 1 nach dem hydrostatischen Prinzip, beispielsweise nach EP 0 983 190. Dieser weist beispielsweise vier flüssigkeitsgefüllte Adern 4 auf, je zwei auf der Vorderseite und auf der Rückseite des G-Anzuges. Diese Adern 4 erstrecken sich von der Schulterpartie des G-Anzuges bis zu den Knöcheln und bauen jeweils den der aktuellen Beschleunigungsbelastung entsprechenden hydrostatischen Druck auf. Dabei verformen sich die Adern 4 von einem im Wesentlichen flach linsenförmigen Querschnitt zu einem runden und spannen dabei das zugfeste und dehnungsarme Gewebe des G-Anzuges 1. Über die in diesem Gewebe dadurch herrschenden Zugspannung wird auf den Körper des Trägers ein seinem Binnendruck entsprechender Aussendruck aufgebaut.

Im dargestellten ersten Ausführungsbeispiel ist auf die Rückenpartie des G-Anzuges 1 eine Tasche 2 aufgenäht, bestehend aus einem Gewebe mit vergleichbaren Eigenschaften, wie jenem des G-Anzuges 1. In diese Tasche 2 ist eine Blase 3 (gestrichelte Kontur) eingelegt. Diese Blase 3, aus einem elastischen Kunststoff, beispielsweise PU oder PVC gefertigt, ist nach aussen allseitig abgeschlossen; ihre Kommunikation mit der Umgebungsluft wird durch ein Ventil 5 hergestellt, welches anhand von Fig. 2a, b näher erläutert wird.

Fig. 2a, b zeigen Längsschnitte AA durch die Tasche 2 und die angrenzenden Teile des G-Anzuges 1. In die Blase 3 ist eine oder sind mehrere Lagen eines Distanzgewirkes oder -gewebes 6 eingelegt. Solche Distanzgewirke 6 - mindestens teilweise aus Monofil-Material hergestellt - sind sehr flexibel und verformbar, behalten dabei, und auch bei Flächenbelastung, ihre Dicke. Durch die Grösse und die Dicke des Distanzgewirkes 6 wird in der Blase 3 ein Minimalvolumen definiert, welches auch dann, wenn das Besatzungsmitglied stark anlehnt oder durch Beschleunigung des Flugzeuges an die Rückenlehne des Sitzes gedrückt wird, nicht verkleinert werden kann.

Die Cockpits von Kampfflugzeugen sind als Druckkabinen ausgebildet. Beim Steigflug des Flugzeuges wird der Aussendruck ausgeglichen bis in eine Flughöhe von etwa 2000 m.ü.M. Darüber wird der Innendruck konstant gehalten. Das auf die Blase 3 aufgesetzte oder in sie eingesetzte Ventil 5 ist im Wesentlichen ein Druckausgleichsventil, welches offen ist, solange im Aussenraum gilt

$$\frac{dp}{dt} \le \frac{dp}{dt}\big|_{max}$$

wo

$$\frac{dp}{dt} = \text{Druckänderungsrate} \left[ \frac{N}{m^2} \Big/ sec \right]$$

$$\frac{dp}{dt}\big|_{max} = \text{Grenzwert von } \frac{dp}{dt}$$

Wird der Grenzwert $\frac{dp}{dt}\big|_{max}$ überschritten, so schliesst das Ventil 5. Da im Regelfall der Kabinen-Innendruck dem Atmosphärendruck von 2000 m.ü.M. entspricht, ist dies auch der Innendruck der Blase 3.

Der eigentliche Höhenschutz-Fall besteht darin, dass

$$\frac{dp}{dt} > \frac{dp}{dt}\big|_{max}$$

Dies ist der Fall beispielsweise

- bei plötzlichem Versagen der Kabinendruckversorgung
- bei Beschädigung oder Verlust der Cockpitabdeckung
- bei einem Notausstieg mittels Schleudersitz.

In solchen Höhenschutz-Fällen schliesst das Ventil 5 das Innere der Blase 3 von der Umgebungsluft ab.

Sowohl Einstellung als auch Funktion des Ventils 5 können entweder rein mechanisch ausgelegt sein, oder aber durch elektronische und elektrische Mittel erfolgen. Im letzteren Falle enthält das als Ventil 5 gekennzeichnete Bauteil auch alle elektronischen und elektrischen Bauelemente einschliesslich der Stromversorgung. Die Funktion des Höhenschutzes ist in beiden genannten Auslegungen des Ventiles 5 autark und bedarf keiner Verbindungen zum Flugzeug.

Ist das Ventil 5 also geschlossen und der Umgebungsdruck kleiner als der auf den genannten Wert limitierten Innendruck der Blase 3, so bläht sich diese gemäss der Darstellung von Fig. 2b. Dabei steigt die Spannung im Gewebe der Tasche 2 und diese zieht sich zusammen. Dadurch wird die Zugspannung σ (in N/m) im Gewebe des G-Anzuges 1 erhöht, mit der Folge einerseits, dass die Druckwirkung auf den Träger des G-Anzuges 1 verstärkt wird, anderseits dass auch der Druck auf die Adern 4 steigt. Dies wiederum hat zur Folge, dass die von der in der Tasche 2 befindlichen Blase 3 ausgehende Zugspannung σ, welche primär nur im Thoraxgebiet wirkt, sich auf den ganzen G-Anzug 1 fortpflanzt, und den Träger des G-Anzuges 1 einem erhöhten Aussendruck aussetzt. Damit kann die unter Umständen lebensgefährdende Annäherung des Binnendruckes des Trägers des G-Anzuges 1 an den Siededruck des Blutes teilweise kompensiert werden.

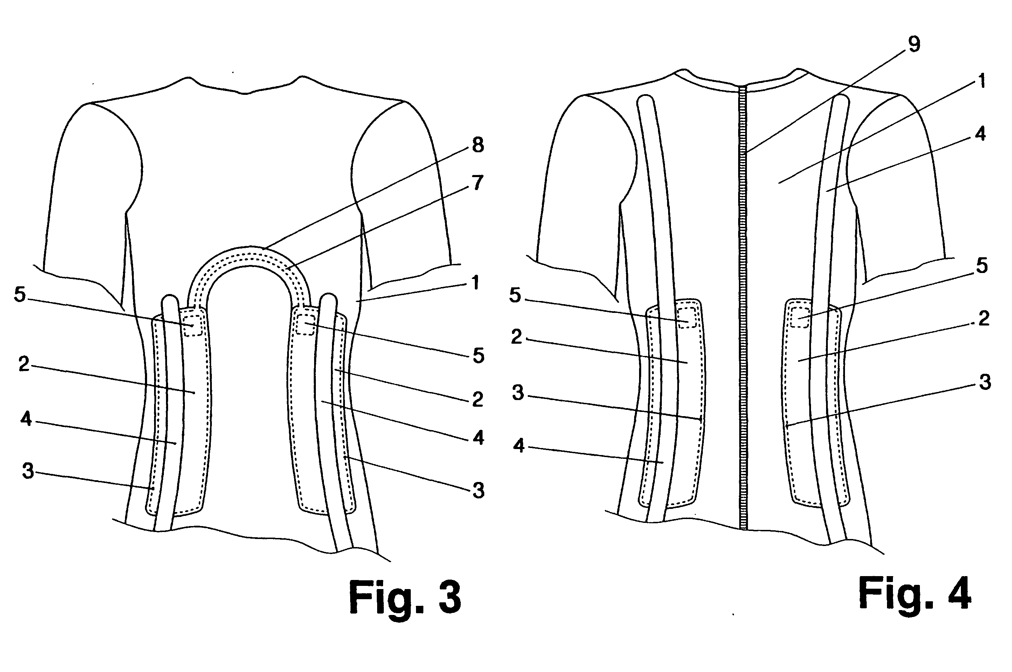

Ein zweites Ausführungsbeispiel des Erfindungsgedankens ist in Fig. 3 dargestellt, wiederum als Draufsicht auf die Rükkenpartie des G-Anzuges 1. Hier sind zwei Taschen 2 angebracht, je eine jeweils unter einer der Adern 4. Jede Tasche 2 enthält eine Blase 3. Ferner kann jede Blase 3 mit einem Ventil 5 versehen sein, so dass beide Blasen parallel aber unabhängig von einander arbeiten. Jede Blase 3 enthält ferner ein - hier nicht dargestelltes - Distanzgewirk 6.

Als Variante dazu sind die beiden Blasen 3 durch eine Rohrleitung 7 verbunden, welche in eine textile Tasche 8 eingelegt ist. In diesem Falle kommunizieren die beiden Blasen 3 ständig und ungehindert, und es ist nur eines der Ventile 5 notwendig.

Das Verhalten von Ventilen 5, Blasen 3 und Taschen 2 ist wie zu Fig. 1, 2 beschrieben. Die Einflussnahme auf die zwei auf der hinteren Seite des G-Anzuges 1 verlaufenden Adern 4 ist direkter als im ersten Ausführungsbeispiel.

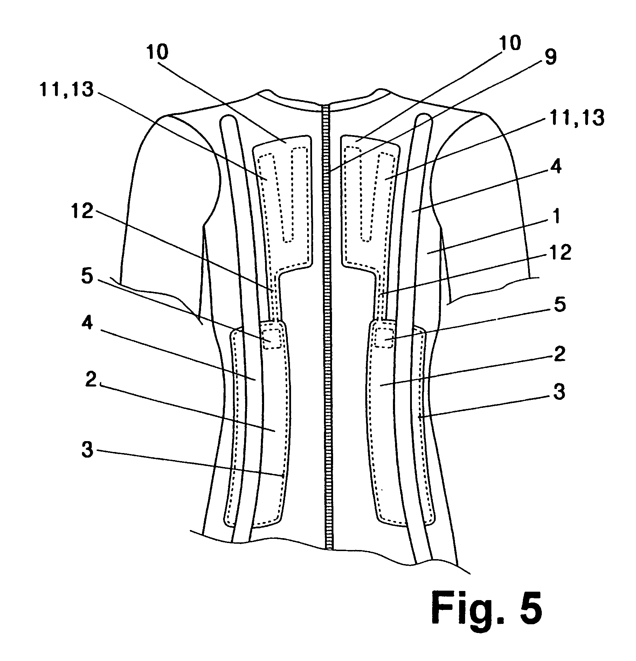

In Fig. 4 ist ein drittes Ausführungsbeispiel der Erfindung dargestellt in einer Draufsicht auf die Vorderseite des Thoraxbereiches des G-Anzuges 1. Die Taschen 2 mit Blasen 3 und

Ventilen 5 sind hier auf der vorderen Seite ebenfalls unter den Adern 4 nun auf der Vorderseite des G-Anzuges 1 angeordnet. Um nach dem Schliessen eines Reissverschlusses 9 herzustellende Verbindungen zwischen den zwei Blasen 3 zu vermeiden, enthält hier jede Blase 3 ein eigenes Ventil 5. Die Wirkungsweise dieses Ausführungsbeispiels ist wie zu jenem von Fig. 3 beschrieben.

Im vierten Ausführungsbeispiel gemäss Fig. 5 ist eine Alternative bzw. ein Zusatz zu den bisherigen Ausführungsbeispielen dargestellt. Die Blasen 3 - oder die einzige Blase 3 gemäss Fig. 1, 2 - sind mittels einer Rohrleitung 12 mit einem zusätzlichen Volumen 11, hier in Form eines beispielsweise U-förmigen Rohres 13, verbunden, welches in einer weiteren Tasche 10 am G-Anzug 1 angebracht ist. In einer ersten Variante ist das Volumen 11 als Zusatz zu jenem in den durch die Distanzgewirke 6 geöffneten Blasen 3 enthaltenen vorgesehen. Da das Volumen 11 beispielsweise durch Kunststoff-Rohre 13 definiert wird, welche unter dem Einfluss der vorkommenden Kräfte und Spannungen kaum Querschnittsveränderungen erfahren, trägt die im Volumen 11 - oder den Volumina 11 - enthaltene Luft voll zum Aufbau der durch die Blasen 3 erzeugten Zugspannung bei.

In einer zweiten Variante enthalten die Blasen 3 entweder kein Distanzgewirke 6 oder aber nur ein dünnes. Dann ist die in den Rohren 13 enthaltene Luft hauptverantwortlich für den Aufbau der Zugspannung σ durch die Blasen 3 in den Taschen 2.

Die in Fig. 5 dargestellten Anordnung der Rohre 13 ist keinesfalls entscheidend. Es kann jeder Ort gewählt werden, der ein Minimum von Störung der Funktion und des Tragkomforts des G-Anzuges 1 verursacht oder zulässt.

Neben der einfachen und kostengünstigen Herstellungsweise des erfindungsgemässen Höhenschutzes hat dieser den grossen Vorteil, dass nicht ein weiteres Kleidungsstück, beispielsweise in Form einer Jacke notwendig ist, welches die Beweglichkeit des Besatzungsmitgliedes unnötig einengt, dass es energetisch und funktional autark ist und keinerlei Verbindungsleitungen zum Flugzeug erfordert.

**Patentansprüche**

1. Höhenschutz-Vorrichtung für Besatzungsmitglieder von Hochleistungsflugzeugen, als Ergänzung eines Beschleunigungsschutzanzuges nach dem hydrostatischen Prinzip (G-Anzug (1)), welcher aus einem hochfesten und dehnungsarmen textilen Gewebe gefertigt ist, mit vier flüssigkeitsgefüllten Adern (4), welche sich im Wesentlichen über die ganze Länge des G-Anzuges (1) erstrecken, **dadurch gekennzeichnet, dass** sie besteht aus

   - mindestens einer Tasche (2) aus einem textilen Gewebe mit vergleichbaren Eigenschaften, wie jenem des G-Anzuges (1), welche auf diesem angenäht werden kann
   - je einer Blase (3) pro Tasche (2) bestehend aus einem elastischen Kunststoff,
   - je einem Ventil (5) pro Blase (3), welches das Innere der Blase (3) mit der Umgebungsluft verbinden und es von ihr abschliessen kann, wobei

   - das Ventil (5) offen bleibt, sofern

$$\frac{dp}{dt} \leq \frac{dp}{dt}|_{max}$$

   - das Ventil (5) schliesst, sofern

$$\frac{dp}{dt} > \frac{dp}{dt}|_{max}$$

   wo $\frac{dp}{dt}$ die Druckänderungsrate der Umgebungsluft bedeutet und

$$\left[\frac{dp}{dt}\right] = \frac{N}{m^2} \Big/ \sec$$

   und $\frac{dp}{dt}|_{max}$ ein voreinstellbarer Grenzwert dieser Druckänderungsrate bedeutet.

2. Höhenschutzvorrichtung nach Patentanspruch 1, **dadurch gekennzeichnet, dass** das Ventil (5) rein mechanisch ist.

3. Höhenschutzvorrichtung nach Patentanspruch 1, **dadurch gekennzeichnet, dass** das Ventil (5) eine elektronische Steuerung und elektrische Betätigung aufweist und deren Energieversorgung im Ventil (5) mitenthalten ist.

**4.** Höhenschutzvorrichtung nach Patentanspruch 1, **dadurch gekennzeichnet, dass** die mindestens eine Blase (3) ein Distanzgewirk (6) enthält, welches ihr auch unter mechanischer Belastung ein vorgegebenes Minimalvolumen zuweist.

**5.** Höhenschutzvorrichtung nach Patentanspruch 4, **dadurch gekennzeichnet, dass** genau eine Tasche (2) mit einer Blase (3) und einem Ventil (5) vorhanden und am Rückenteil des G-Anzuges (1) so befestigt werden kann, dass sie zwischen die an der Rückseite des G-Anzuges (1) verlaufenden Adern (4) zu liegen kommt.

**6.** Höhenschutzvorrichtung nach Patentanspruch 4, **dadurch gekennzeichnet, dass** zwei Taschen (2) mit je einer Blase (3) und je einem Ventil (5) vorhanden und am Rückenteil des G-Anzuges (1) nebeneinander so befestigt werden können, dass sie je unter eine der an der Rückseite des G-Anzuges (1) verlaufenden Adern (4) zu liegen kommen.

**7.** Höhenschutzvorrichtung nach Patentanspruch 6, **dadurch gekennzeichnet, dass** eine erste Rohrleitung (7) vorhanden und in einer am G-Anzug (1) angenähten Tasche (8) eingelegt werden kann, welche Rohrleitung (7) die beiden Blasen (3) verbindet.

**8.** Höhenschutzvorrichtung nach Patentanspruch 4, **dadurch gekennzeichnet, dass** zwei Taschen (2) mit je einer Blase (3) und am Rückenteil des G-Anzuges (1) nebeneinander so befestigt werden können, dass sie je unter eine der an der Rückseite des G-Anzuges (1) verlaufenden Adern (4) zu liegen kommen, und dass eine erste Rohrleitung (7) vorhanden und in einer am G-Anzug (1) angenähten Tasche (8) eingelegt werden kann, welche Rohrleitung (7) die beiden Blasen (3) verbindet, und insgesamt nur ein Ventil (5) vorhanden und in einer der Blasen (3) eingesetzt ist.

**9.** Höhenschutzvorrichtung nach Patentanspruch 4, **dadurch gekennzeichnet, dass** zwei Taschen (2) mit je einer Blase (3) und je einem Ventil (5) vorhanden und am Vorderteil des G-Anzuges (1) nebeneinander so befestigt werden können dass sie je unter eine der an der Rückseite des G-Anzuges (1) verlaufenden Adern (4) zu liegen kommen.

**10.** Höhenschutzvorrichtung nach Patentanspruch 1, **dadurch gekennzeichnet, dass** mindestens ein mit der mindestens einen Blase (3) durch eine weitere Rohrleitung (12) kommunizierendes zusätzliches Volumen (11) vorhanden und durch ein durch die vorzusehenden Kräfte und Zugspannungen nicht verformbares Kunststoff-Rohr (13) umschlossen ist, welches Kunststoff-Rohr (13) in einer weiteren Tasche (10) am G-Anzug (1) untergebracht werden kann.

## Claims

**1.** Altitude protection device for crew members of high-performance aircraft, as an addition to an acceleration protection suit according to the hydrostatic principle (G-suit (1)) which is manufactured from a high-strength and low-stretch textile fabric, with four liquid-filled veins (4) which extend essentially over the entire length of the G-suit (1), **characterized in that** it consists of

- at least one pocket (2) consisting of a textile fabric having comparable properties to that of the G-suit (1), which can be stitched to the latter,
- for each pocket (2), a bladder (3) consisting of an elastic plastic,
- for each bladder (3), a valve (5) which can connect the interior of the bladder (3) to the surrounding air and can close it off from the latter,
- the valve (5) remaining open in so far as

$$\frac{dp}{dt} \leq \frac{dp}{dt}\Big|_{max}$$

- the valve (5) closing in so far as

$$\frac{dp}{dt} > \frac{dp}{dt}\Big|_{max}$$

where $\frac{dp}{dt}$ represents the rate of pressure change of the surrounding air and

$$\left[\frac{dp}{dt}\right] = \frac{N}{m^2} \Big/ sec$$

and $\frac{dp}{dt}\big|_{max}$ represents a presettable limit value of this rate of pressure change.

2. Altitude protection device according to Patent Claim 1, **characterized in that** the valve (5) is purely mechanical.

3. Altitude protection device according to Patent Claim 1, **characterized in that** the valve (5) has an electronic control and electric actuation and the supply of energy for these is also contained in the valve (5).

4. Altitude protection device according to Patent Claim 1, **characterized in that** the at least one bladder (3) contains a knitted spacer fabric (6) which gives it a predetermined minimum volume even under mechanical load.

5. Altitude protection device according to Patent Claim 4, **characterized in that** exactly one pocket (2) with a bladder (3) and with a valve (5) is present and can be fastened to the back part of the G-suit (1) in such a way that it comes to lie between the veins (4) running on the back side of the G-suit (1).

6. Altitude protection device according to Patent Claim 4, **characterized in that** two pockets (2), each with a bladder (3) and each with a valve (5), are present and can be fastened next to one another on the back part of the G-suit (1) in such a way that they come to lie in each case under one of the veins (4) running on the back side of the G-suit (1).

7. Altitude protection device according to Patent Claim 6, **characterized in that** a first pipeline (7) is present and can be inserted in a pocket (8) stitched to the G-suit (1), which pipeline (7) connects the two bladders (3).

8. Altitude protection device according to Patent Claim 4, **characterized in that** two pockets (2), each with a bladder (3), can be fastened next to one another on the back part of the G-suit (1) in such a way that they come to line in each case under one of the veins (4) running on the back side of the G-suit (1), and **in that** a first pipeline (7) is present and can be inserted in a pocket (8) stitched to the G-suit (1), which pipeline (7) connects the two bladders (3), and, overall, only one valve (5) is present and is inserted in one of the bladders (3).

9. Altitude protection device according to Patent Claim 4, **characterized in that** two pockets (2), each with a bladder (3) and each with a valve (5), are present and can be fastened next to one another to the front part of the G-suit (1) in such a way that they come to lie in each case under one of the veins (4) running on the back side of the G-suit (1).

10. Altitude protection device according to Patent Claim 1, **characterized in that** at least one additional volume (11) communicating with the at least one bladder (3) by means of a further pipeline (12) is present and is surrounded by a plastic pipe (13) non-deformable by the forces and tensile stresses to be provided, which plastic pipe (13) can be accommodated in a further pocket (10) on the G-suit (1).

**Revendications**

1. Dispositif de protection en altitude pour les membres d'équipage d'avions de combat, en complément d'une combinaison de protection contre l'accélération selon le principe hydrostatique (combinaison anti-accélération (1)), lequel est fabriqué dans un tissu textile hautement résistant et peu enclin à se distendre, comportant quatre veines (4) remplies de liquide, qui s'étendent essentiellement sur l'ensemble de la longueur de la combinaison anti-accélération, **caractérisé en ce que** le dispositif est constitué de :

   - au moins une poche (2) constituée d'un tissu textile avec des propriétés comparables à celles du tissu de la combinaison anti-accélération (1), sur laquelle ladite poche peut être cousue,

   - une vessie (3) respective par poche (2) constituée d'un plastique élastique,

- une valve (5) respective par vessie (3), laquelle peut relier l'intérieur de la vessie (3) avec l'air de l'environnement extérieur et isoler l'intérieur de la vessie de celui-ci, moyennant quoi

- la valve (5) reste ouverte, tant que

$$\frac{dp}{dt} \leq \frac{dp}{dt}\Big|_{max}$$

- la valve (5) se ferme, dès que

$$\frac{dp}{dt} > \frac{dp}{dt}\Big|_{max}$$

où $\frac{dp}{dt}$ définit le taux de variation de la pression de l'air de l'environnement extérieur et

$$\left[\frac{dp}{dt}\right] = \frac{N}{m^{1}}\Big/sec$$

et $\frac{dp}{dt}\Big|_{max}$ définit une valeur limite pré-réglable de ce taux de variation de la pression.

2. Dispositif de protection en altitude selon la revendication 1, **caractérisé en ce que** la valve (5) est exclusivement mécanique.

3. Dispositif de protection en altitude selon la revendication 1, **caractérisé en ce que** la valve (5) présente une commande électronique et un dispositif d'actionnement électrique, dont l'alimentation en énergie est également contenue dans la valve (5).

4. Dispositif de protection en altitude selon la revendication 1, **caractérisé en ce que** au moins une vessie (3) contient un matelas de mailles d'aération (6), lequel lui assigne un volume minimal prédéterminé également en présence d'une contrainte mécanique.

5. Dispositif de protection en altitude selon la revendication 4, **caractérisé en ce que** seule une poche (2) comportant une vessie (3) et une valve (5) est présente et peut être fixée sur la partie dorsale de la combinaison anti-accélération (1), de telle sorte qu'elle vienne reposer entre les veines (4) s'étendant sur la partie dorsale de la combinaison anti-accélération (1).

6. Dispositif de protection en altitude selon la revendication 4, **caractérisé en ce que** deux poches (2) comportant chacune une vessie (3) et une valve (5) sont présentes et peuvent être fixées l'une à côté de l'autre sur la partie dorsale de la combinaison anti-accélération (1), de telle sorte qu'elle viennent chacune reposer sous une des veines (4) s'étendant sur le côté dorsal de la combinaison anti-accélération (1).

7. Dispositif de protection en altitude selon la revendication 6, **caractérisé en ce que** une première tuyère (7) est présente et peut être insérée dans une poche (8) cousue sur la combinaison anti-accélération (1), laquelle tuyère (7) relie les deux vessies (3).

8. Dispositif de protection en altitude selon la revendication 4, **caractérisé en ce que** deux poches (2) comportant chacune une vessie (3) peuvent être fixées l'une à côté de l'autre sur la partie dorsale de la combinaison anti-accélération (1) de telle sorte qu'elles viennent chacune reposer sous une des veines (4) s'étendant sur le côté dorsal de la combinaison anti-accélération (1) et **en ce que** une première tuyère (7) est présente et peut être insérée dans une poche (8) cousue sur la combinaison anti-accélération (1), laquelle tuyère (7) relie les deux vessies (3) et au total une seule valve (5) est présente et est utilisée dans une des vessies (3).

9. Dispositif de protection en altitude selon la revendication 4, **caractérisé en ce que** deux poches (2) comportant chacune une vessie (3) et une valve (5) sont présentes et peuvent être fixées l'une à côté de l'autre sur la partie frontale de la combinaison anti-accélération (1), de telle sorte qu'elles viennent chacune reposer sous une des veines (4) s'étendant sur le côté dorsal de la combinaison anti-accélération (1).

**10.** Dispositif de protection en altitude selon la revendication 1, **caractérisé en ce que** au moins un volume (11) supplémentaire communiquant avec au moins une des vessies (3) par une tuyère (12) supplémentaire est présent et est inclus dans un tuyau de plastique (13) non déformable sous les forces et contraintes de traction prévisibles, lequel tuyau de plastique (13) est logé dans une poche (10) supplémentaire sur la combinaison anti-accélération (1).

# Fig. 1

# Fig. 2

EP 1 483 151 B1

Fig. 4

Fig. 3

**Fig. 5**

EP 1 483 151 B1